# FASCICULE DE BREVET EUROPEEN

(11) **EP 2 216 675 B1**
(45) Date de publication et mention de la délivrance du brevet: **28.12.2011**
(21) Numéro de dépôt: 10152142.5
(22) Date de dépôt: 29.01.2010
(51) Int. Cl.: G02F 1/13357

(54) **Dispositif d'éclairage à diodes électroluminescentes compatible avec des jumelles de vision de nuit**
Mit Nachtsichtbrillen kompatible Beleuchtungsvorrichtung mit Leuchtdioden
Night vision goggle compatible lighting device with light-emitting diodes

(30) Priorité: 06.02.2009 FR 0900528
(43) Date de publication de la demande: 11.08.2010
(73) Titulaire: Thales, 92200 Neuilly Sur Seine (FR)
(72) Inventeur: Mozer, Laurent, 33700 Merignac (FR); Petitdemange, Arnaud, 33290 Blanquefort (FR); Rols, M. Olivier, 33600 Pessac (FR)
(74) Mandataire: Bréda, Jean-Marc

(56) Documents cités:
- JP-A- 6 175 601
- US-A- 5 262 880
- US-A1- 2007 171 623

## Description

Le domaine de l'invention est celui des dispositifs d'éclairage compatibles « NVG » à diodes électroluminescentes pour écrans plats de visualisations tels que les matrices à cristaux liquides. On entend par éclairage compatible « NVG », un éclairage pouvant être utilisé avec des jumelles à amplification de lumière dites « NVG » pour « Night Vision Goggle», c'est-à-dire que l'éclairage ne sature pas les systèmes d'amplification des jumelles. Les dispositifs d'éclairages sont également connus sous la terminologie anglo-saxonne de « backlighting ». Les écrans plats ont de multiples applications, ils peuvent être utilisés, par exemple, pour réaliser des dispositifs d'affichage de tableaux de bord d'aéronefs.

L'éclairage des écrans plats à cristaux liquides a été initialement assuré par des tubes fluorescents, généralement de type CCFL, acronyme signifiant « Cold Cathod Fluorescent Light ». Cette technologie présente un certain nombre d'inconvénients. On citera essentiellement les problèmes d'obsolescence, la nécessité d'une alimentation électrique à haute tension, une consommation électrique élevée et des problèmes de compatibilité avec les nouvelles normes environnementales dites RoHS, acronyme signifiant : « Restriction Of the use of certain Hazardous substance in electrical and electronic equipment ». Pour être compatibles « NVG » et ne pas saturer les dispositifs d'amplification des jumelles, les éclairages à tubes fluorescents comportent des filtres optiques, ce qui ajoute une difficulté supplémentaire.

Les tubes fluorescents sont actuellement concurrencés par les éclairages à diodes électroluminescentes qui ne présentent pas certains des inconvénients précédents. Les diodes sont des sources de lumière ponctuelles ou quasi-ponctuelles émettant dans un cône d'émission donné, la plupart des diodes ayant un profil d'émission dit lambertien. Pour éclairer un écran plat de façon homogène à partir de sources ponctuelles, plusieurs dispositifs optiques ont été proposés. Ainsi, le dispositif d'éclairage peut être constitué d'un « tapis » de diodes électroluminescentes disposées sous l'écran. Généralement, on utilise trois types de diodes émettant dans trois bandes spectrales différentes dans le spectre visible de façon que le mélange des faisceaux émis donne une lumière blanche. Généralement, les diodes émettent dans le rouge, le vert et le bleu.

On sait que les dispositifs d'amplification des jumelles de vision de nuit ont un coefficient d'amplification important dans une bande spectrale commençant à l'extrémité rouge du spectre visible, autour de 650 nanomètres et finissant dans l'infrarouge proche, autour de 930 nanomètres. Les diodes émettant dans le vert ou dans le bleu sont naturellement compatibles « NVG ", leur émission dans le rouge ou le proche infrarouge étant très faible ou inexistante. Il n'en est pas de même des diodes émettant dans le rouge qui doivent être filtrées de façon à ne pas saturer les jumelles. Le problème du filtrage n'est pas simple. En effet, il doit être suffisant pour assurer la compatibilité « NVG » et ne pas être trop important pour que la colorimétrie reste correcte, c'est-à-dire pour que la couleur rouge reste rouge et ne devienne pas ou trop orangée ou trop sombre. La compatibilité « NVG » fait l'objet de normes internationales comme la norme MIL STD 3009, particulièrement strictes. Les problèmes de colorimétrie sont très importants dans la mesure où, dans un grand nombre d'applications, le rouge est associé aux alarmes et doit être parfaitement identifié comme tel. Il faut également noter que la sensibilité de l'oeil décroît très rapidement dans la partie rouge du spectre, compliquant encore la réalisation du filtre. Enfin, tous les types de diodes rouges n'ont pas strictement la même répartition spectrale. Ainsi, chaque changement de diode s'accompagne d'une nouvelle optimisation des moyens de filtrage.

US2007171623 décrit un système d'éclairage compatible avec des jumelles de vision nocturne qui comporte un tapis de diodes électroluminescentes bleues, vertes, oranges et rouges. En mode jour, les diodes bleues, vertes et rouges sont activées, en mode nuit les diodes bleues, vertes et oranges sont activées. Les diodes oranges peuvent être remplacées par des diodes rouges recouvertes par un filtre hémisphérique.

US5262880 décrit également un système d'éclairage compatible avec des jumelles de vision nocturne. Le système consiste en une source lumineuse collimatée puis filtrée par un filtre planaire et enfin diffusée afin d'obtenir un large angle d'éclairage.

Pour pallier ces différents inconvénients, le dispositif selon l'invention comporte un filtre interférentiel disposé au-dessus de la diode, le filtre ayant un diamètre déterminé. Ainsi, pour assurer la compatibilité « NVG » et maintenir une colorimétrie satisfaisante, on dispose de deux types de paramètres, les paramètres photométriques du filtre et d'autre part les paramètres géométriques qui permettent de « doser » la quantité de lumière rouge filtrée par le filtre optique.

Plus précisément, l'invention a pour objet un dispositif d'éclairage selon la revendication 1

Avantageusement, le dispositif comporte des moyens de commande assurant deux modes de fonctionnement dits de jour et de nuit, en mode de jour, les diodes bleues, vertes et rouges sont allumées, en mode de nuit, les diodes bleues, les diodes vertes et uniquement les diodes rouges filtrées sont allumées.

L'invention sera mieux comprise et d'autres avantages apparaîtront à la lecture de la description qui va suivre donnée à titre non limitatif et grâce aux figures annexées parmi lesquelles :
La figure 1 représente une vue en coupe d'un dispositif selon l'invention ;
La figure 2 représente une vue de dessus des filtres optiques ;
La figure 3 représente la transmission du filtre optique en fonction de la longueur d'onde et la répartition spectrale du spectre d'émission d'une diode rouge.

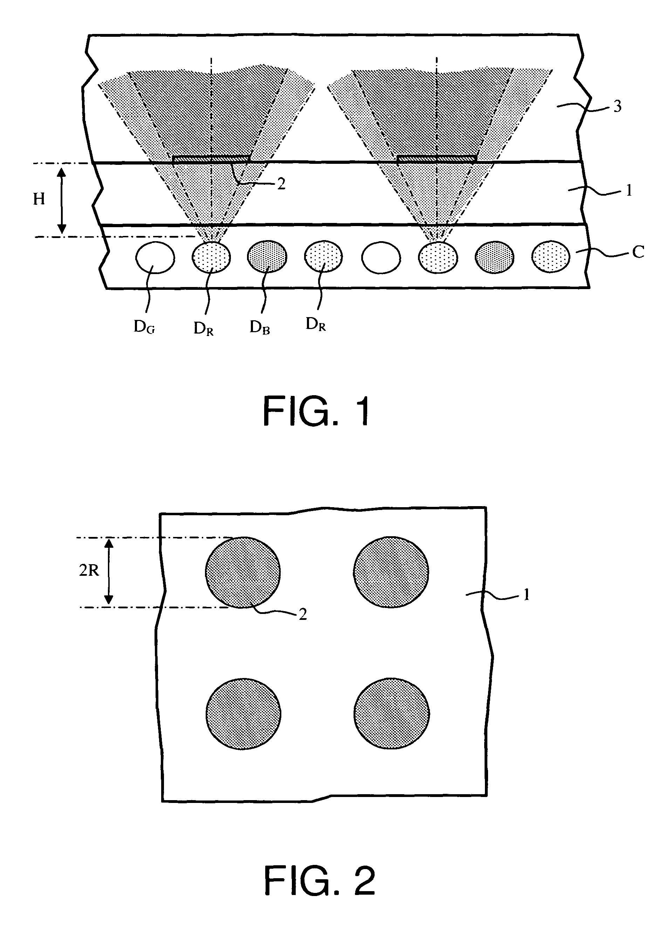

La figure 1 représente un dispositif d'éclairage selon l'invention. Il comprend un tapis C de diodes électroluminescentes comprenant des diodes vertes D_{G} émettant dans une première bande spectrale centrée sur une première longueur d'onde située dans le vert, des diodes bleues D_{B} émettant dans une seconde bande spectrale centrée sur une seconde longueur d'onde située dans le bleu et des diodes rouges D_{R} émettant dans une troisième bande spectrale centrée sur une troisième longueur d'onde située dans le rouge. Le dispositif comporte une lame optique 1 disposée au-dessus du tapis de diodes. Cette lame comprend une pluralité de filtres interférentiels 2 disposés dans des zones situées au-dessus de certaines des diodes rouges à une hauteur H.

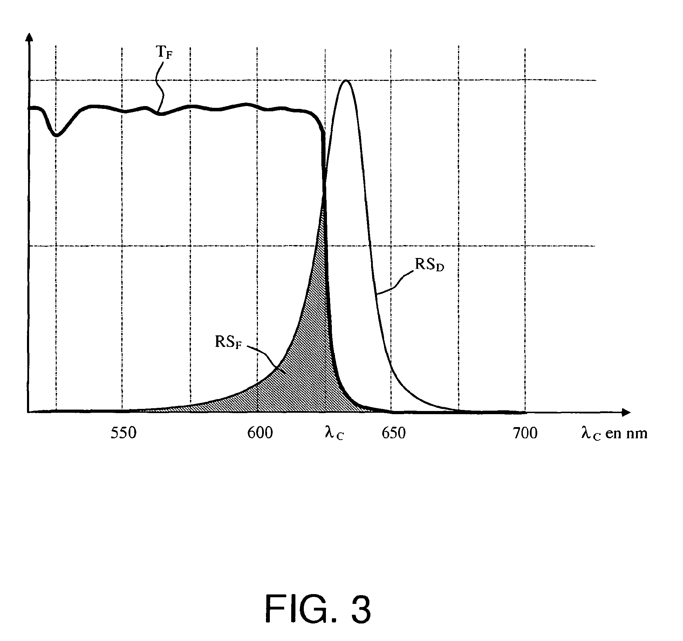

Comme indiqué sur la figure 3 qui représente la transmission T_{F} optique des filtres en fonction de la longueur d'onde λ, les filtres 2 ont une longueur d'onde de coupure λ_{C} située dans le rouge au voisinage de 630 nanomètres de façon à assurer la compatibilité du rayonnement transmis par le filtre avec l'utilisation de jumelles de vision de nuit.

Les filtres ont une forme géométrique à symétrie radiale ; la forme la plus simple à mettre en oeuvre est le cercle comme indiqué sur la figure 2 qui représente une vue de dessus des filtres optiques 2. Mais, il est possible d'utiliser des formes plus sophistiquées. A titre d'exemple, la forme des filtres peut être constituée d'anneaux concentriques ou comporter des motifs. Dans le cas simple où la forme des filtres est un cercle de rayon R, le filtre agit sur le rayonnement de la diode rouge émis dans un angle solide d'angle au sommet θ avec tan(θ) égale à R/H. Le reste du rayonnement émis par la diode rouge n'est pas filtré comme on le voit sur la figure 1 où le rayonnement transmis par le filtre est représenté en gris foncé et le rayonnement transmis directement par la diode est représenté en gris clair.

Sur la figure 3, est également représentée la répartition spectrale RS_{D} du spectre d'émission d'une diode rouge. Ainsi, avec le dispositif selon l'invention, un premier flux dont la répartition spectrale RS_{F} est représentée en gris foncé sur la figure 3 est transmis à travers le filtre optique, un second flux dont la répartition spectrale est celle de la diode est transmis sans avoir traversé le filtre. En jouant sur la hauteur du filtre et sur sa forme, il est possible de répartir comme on le souhaite le flux lumineux issu de la diode rouge entre le flux filtré et le flux non filtré. On peut ainsi obtenir, à la fois, la compatibilité « NVG » et une colorimétrie satisfaisante.

A titre d'exemple, pour une diode ayant les caractéristiques suivantes :
Largeur d'indicatrice d'intensité lumineuse : 40 degrés à mi-hauteur,
Spectre de la diode ayant un pic d'émission centré sur 630 nanomètres et une longueur d'onde dominante comprise entre 610 et 615 nanomètres ;
Le filtre ayant une longueur d'onde de coupure située dans le rouge au voisinage de 630 nanomètres, le rayon du filtre étant de l'ordre de 6 millimètres, la hauteur du filtre au-dessus de la diode de l'ordre de 15 millimètres,
La compatibilité de la diode filtrée avec la norme MIL-STD-3009 est assurée et les coordonnées colorimétriques de la lumière émise par la diode filtrée à travers la matrice LCD de l'écran sont, en coordonnées (u', v') selon la norme CIE 1976, telles que u' dépasse 0.42. On considère généralement que lorsque la valeur de la coordonnées u' est supérieure à cette valeur, la couleur apparaît rouge, ce qui est bien le but recherché.

Le dispositif comporte également au-dessus de cette lame un guide de lumière 3 qui assure le mélange des flux lumineux provenant des différentes diodes de façon à obtenir un éclairage uniforme et « blanc ». Ce guide peut être une simple lame à faces planes et parallèles, transparente dont l'épaisseur est suffisante pour assurer un mélange correct. Ce guide peut être un composant plus sophistiqué comprenant, par exemple, des parties prismatiques permettant d'obtenir une homogénéité de flux lumineux dans un encombrement plus faible que celui d'une lame simple.

Le dispositif est apte à fonctionner de jour comme de nuit. Il comporte des moyens de commande électroniques assurant les deux modes de fonctionnement. En mode de jour, les moyens de commande électroniques pilotent les diodes bleues, vertes et rouges non filtrées qui sont allumées. En mode de nuit, les diodes bleues, les diodes vertes et uniquement les diodes rouges filtrées sont allumées. Bien entendu, les moyens de commande permettent de régler les flux lumineux émis soit en faisant varier l'intensité électrique circulant dans les diodes, soit en faisant varier les temps d'allumage des diodes, technique dite PWM pour « Pulse Width Modulator »

## Revendications

1. Dispositif d'éclairage compatible avec l'utilisation des jumelles de vision de nuit comportant un intensificateur de lumière, ledit dispositif comportant au moins un tapis (C) de diodes comportant trois types de diodes électroluminescentes appelées diodes vertes (D_{G}), diodes bleues (D_{B}) et diodes rouges (D_{R}) émettant dans trois bandes spectrales différentes centrées respectivement sur une première longueur d'onde située dans le vert, une seconde longueur d'onde située dans le bleu, une troisième longueur d'onde située dans le rouge, **caractérisé en ce que** le dispositif comporte une lame optique (1) disposée au-dessus du tapis de diodes, les zones de la lame optique situées à une hauteur (H) au dessus de certaines des diodes rouges comportant un filtre interférentiel (2) dont la transmission optique a une longueur d'onde de coupure située dans le rouge au voisinage de 630 nanomètres, ladite hauteur (H) et la forme géométrique du filtre interférentiel (2) étant choisies de façon à répartir la lumière émise par les diodes rouges entre une partie transmise à travers le filtre interférentiel (2) et une partie ne traversant pas le filtre interférentiel (2).

2. Dispositif d'éclairage selon la revendication 1, **caractérisé en ce qu'**il comporte des moyens de commande assurant deux modes de fonctionnement dits de jour et de nuit, en mode de jour, les diodes bleues, vertes et rouges sont allumées, en mode de nuit, les diodes bleues, les diodes vertes et uniquement les diodes rouges filtrées sont allumées.

## Claims

1. A lighting device compatible with the use of night vision goggles comprising a light intensifier, said device comprising at least one layer (C) of diodes comprising three types of light-emitting diodes, referred to as green diodes (D_{G}), blue diodes (D_{B}) and red diodes (D_{R}), emitting in three different spectral bands respectively centred on a first wavelength located in the green, a second wavelength located in the blue, a third wavelength located in the red, **characterised in that** the device comprises an optical plate (1) disposed above the layer of diodes, the zones of the optical plate that are located at a height (H) above certain ones of the red diodes comprising an interference filter (2), the optical transmission of which has a cut-off wavelength located in the red in the vicinity of 630 nanometres, said height (H) and the geometric shape of said interference filter (2) being selected so as to distribute the light emitted by the red diodes between a part transmitted through the interference filter (2) and a part that does not pass through said interference filter (2).

2. The lighting device according to claim 1, **characterised in that** it comprises control means providing two operating modes, referred to as daytime and night-time modes, wherein in daytime mode the blue, green and red diodes are lit and in night-time mode the blue, green and only the filtered red diodes are lit.

## Patentansprüche

1. Beleuchtungsvorrichtung, die mit der Verwendung einer Nachtsichtbrille mit Lichtverstärker kompatibel ist, wobei die Vorrichtung wenigstens eine Schicht (C) mit Dioden umfasst, die drei Leuchtdiodentypen umfasst, als grüne Dioden (D_{G}), blaue Dioden (D_{B}) und rote Dioden (D_{R}) bezeichnet, die in drei verschiedenen Spektralbändern emittieren, die jeweils auf einer ersten Wellenlänge im grünen Bereich, einer zweiten Wellenlänge im blauen Bereich, einer dritten Wellenlänge im roten Bereich zentriert sind, **dadurch gekennzeichnet, dass** die Vorrichtung eine optische Platte (1) umfasst, die über der Diodenschicht angeordnet ist, wobei die Zonen der optischen Platte, die sich in einer Höhe (H) über bestimmte rote Dioden befinden, ein Interferenzfilter (2) umfassen, dessen Lichtdurchlässigkeit eine Grenzwellenlänge im roten Bereich nahe 630 Nanometer hat, wobei die Höhe (H) und die geometrische Form des Interferenzfilters (2) so gewählt sind, dass das von den roten Dioden emittierte Licht zwischen einem von dem Interferenzfilter (2) durchgelassenen Teil und einem von dem Interferenzfilter (2) nicht durchgelassenen Teil verteilt wird.

2. Beleuchtungsvorrichtung nach Anspruch 1, **dadurch gekennzeichnet, dass** sie Steuermittel umfasst, die zwei Betriebsarten bieten, als Tages- und Nachtbetriebsart bezeichnet, wobei in der Tagesbetriebsart die blauen, die grünen und die roten Diode leuchten und in der Nachtbetriebsart die blauen Dioden, die grünen Dioden und nur die gefilterten roten Dioden leuchten.
